# EUROPEAN PATENT APPLICATION

(11) **EP 4 579 748 A1**
(43) Date of publication of application: **02.07.2025**
(21) Application number: 23867042.6
(22) Date of filing: 27.06.2023
(51) Int. Cl.: H01L 27/02, H01L 27/118, G06F 30/392

(54) **STANDARD CELL, INTEGRATED CIRCUIT, STANDARD CELL LIBRARY, AND ELECTRONIC DEVICE**

(30) Priority: 19.09.2022 CN 202211147967
(71) Applicant: Huawei Technologies Co., Ltd., Shenzhen, Guangdong 518129 (CN)
(72) Inventor: CHEN, Zhifeng, Shenzhen, Guangdong 518129 (CN); CHEN, Zanfeng, Shenzhen, Guangdong 518129 (CN); ZHAN, Zhan, Shenzhen, Guangdong 518129 (CN); ZHANG, Xiao, Shenzhen, Guangdong 518129 (CN); LIAO, Ping, Shenzhen, Guangdong 518129 (CN)
(74) Representative: Isarpatent
(86) International application number: PCT/CN2023/102798
(87) International publication number: WO 2024/060747

(57) **Abstract**

Embodiments of this application relate to the field of semiconductor technologies, and provide a standard cell, an integrated circuit, a standard cell library, and an electronic device, to optimize a structure of the standard cell, so that different types of standard cells can be spliced at will. The standard cell includes: a first active region and a second active region that are an N-type active region and a P-type active region for each other; a first gate strip, where the first gate strip extends in a first direction and is located on a side that is of the first active region and the second active region and that is away from a substrate; two second gate strips, where the first gate strip is located between the two second gate strips, and two ends of the second active region are located on a side that is of the two second gate strips and that is close to the substrate; and two spacing regions and two first shallow trench isolation regions, where the first active region is located between the two spacing regions, the second active region is located between the two first shallow trench isolation regions, and a width of the spacing region and a width of the first shallow trench isolation region are equal to an arrangement spacing between the first gate strip and the second gate strip. Each side of the standard cell diffuses one contact poly pitch (CPP) outwards an edge gate.

## Description

This application claims priority to Chinese Patent Application No. 202211147967.3, filed with the China National Intellectual Property Administration on September 19, 2022 and entitled "STANDARD CELL, INTEGRATED CIRCUIT, STANDARD CELL LIBRARY, AND ELECTRONIC DEVICE", which is incorporated herein by reference in its entirety.

### TECHNICAL FIELD

This application relates to the field of semiconductor technologies, and in particular, to a standard cell, an integrated circuit, a standard cell library, and an electronic device.

### BACKGROUND

A standard cell library (standard cell library) includes a layout library, a symbol library, a circuit logic library, and the like, and is a basic part of a back-end design process of an integrated circuit chip. Currently, in a standard cell library of a fin field-effect transistor (fin field-effect transistor, FinFET) technology node, standard cells (standard cells, STCs) are classified based on types of isolation between the standard cells. The standard cells may be classified into three types: a double diffusion break (double diffusion break, DDB) standard cell, a single diffusion break (single diffusion break, SDB) standard cell, and a mixed diffusion break (mix diffusion break, MDB) standard cell.

The DDB standard cell has lower preparation costs, the SDB standard cell has a smaller design area, and the MDB standard cell has better performance. The three types of standard cells have respective advantages. How to splice the three types of standard cells at will becomes a technical problem that needs to be solved by persons skilled in the art.

### SUMMARY

Embodiments of this application provide a standard cell, an integrated circuit, a standard cell library, and an electronic device, to optimize a structure of the standard cell, so that different types of standard cells can be spliced at will.

To achieve the foregoing objective, this application uses the following technical solutions.

According to a first aspect of embodiments of this application, a standard cell is provided. The standard cell is a standard cell that has a specific circuit function in an integrated circuit. The standard cell may be a DDB standard cell or an MDB standard cell. The standard cell includes a first active region and a second active region. The first active region extends in a second direction, and the second active region also extends in the second direction. The first active region and the second active region are disposed side by side on a side of a substrate in a first direction. Certainly, the substrate may be a structure that belongs to the standard cell, or the substrate may be a structure that does not belong to the standard cell. The first active region and the second active region are an N-type active region and a P-type active region for each other. For example, the first active region is a P-type active region, and the second active region is an N-type active region. The standard cell further includes at least one first gate strip. The first gate strip extends in the first direction, and is located above (a side away from the substrate) the first active region and the second active region. A plurality of first gate strips are arranged in the second direction. The standard cell further includes two second gate strips, and the second gate strips extend in the first direction. The at least one first gate strip is located between two second gate strips, and the two second gate strips and the at least one first gate strip are arranged at equal spacings in the second direction. The first direction intersects with the second direction, and the first direction and the second direction are parallel to the substrate. In the second direction, two ends of the second active region are located below (a side close to the substrate) the two second gate strips. The standard cell further includes two spacing regions and two first shallow trench isolation regions. In the second direction, the spacing region is located on an extension line of the first active region, and the first active region is located between the two spacing regions; and the first shallow trench isolation region is located on an extension line of the second active region, and the second active region is located between the two first shallow trench isolation regions. A width of the spacing region and a width of the first shallow trench isolation region are equal to the arrangement spacing between the two second gate strips and the at least one first gate strip.

A width of a part that is of the conventional DDB standard cell and the MDB standard cell and that diffuses outwards the second gate strip is half (for example, 0.5 contact poly pitches CPPs) of the arrangement spacing between the first gate strip and the second gate strip. Therefore, the conventional DDB standard cell and the MDB standard cell are extended by half the spacing (0.5 CPP) on a single side in comparison with a conventional SDB standard cell. As a result, the conventional DDB standard cell and MDB standard cell cannot be aligned and spliced with the conventional SDB standard cell. According to the DDB standard cell or the MDB standard cell provided in this embodiment of this application, a width of a part (the spacing region and the first shallow trench isolation region) that is in the standard cell and that diffuses outwards the second gate strip is set to be equal to the arrangement spacing (one CPP) between the first gate strip and the second gate strip but not half of the spacing (0.5 CPP). In this way, in a width direction, the standard cell provided in this embodiment of this application extends one spacing (one CPP) on a single side in comparison with the conventional SDB standard cell. In this case, when the standard cells are spliced, a distance between a splicing line and the second gate strip is an integer multiple of the spacing (CPP). Different types of standard cells may be directly abutted to implement mixed splicing of the different types of standard cells. A problem that standard cells of a same height (or heights are in an integer multiple relationship) and different types cannot be compatible with each other in an integrated circuit due to different splicing and alignment manners between the standard cells is resolved, so as to implement application of an HDB technology.

In a possible implementation, the second gate strip includes a first blocking gate, a first blocking part, and a first diffusion break. The first blocking part is located between the first blocking gate and the first diffusion break. In a direction perpendicular to the substrate (a third direction), the first diffusion break extends to a bottom surface that is of the first active region and that is close to the substrate, and the first blocking gate is located on a side that is of the second active region and that is away from the substrate. The standard cell may be the MDB standard cell, to implement mixed splicing of the MDB standard cell and the SDB standard cell.

In a possible implementation, the spacing region and the first active region are a same type of active regions. In this way, when the first active region is formed, the spacing region may be synchronously formed, and a separate process is not required to form the spacer region, thereby simplifying the process.

In a possible implementation, the second gate strip is located on the side that is of the first active region and the second active region and that is away from the substrate, and the spacing region is a second shallow trench isolation region. The standard cell may be the DDB standard cell, to implement mixed splicing of the DDB standard cell and the SDB standard cell.

In a possible implementation, the standard cell further includes two first splicing strips, the two second gate strips are located between the two first splicing strips in the second direction, and a distance between the first splicing strip and the second gate strip is equal to the spacing. The first splicing strip is set, so that alignment and splicing precision of the standard cell can be improved.

In a possible implementation, the first splicing strips and the first gate strip are disposed at a same layer. In this way, the first splicing strip and the first gate strip may be synchronously formed based on a same process, thereby simplifying the process.

In a possible implementation, in the direction perpendicular to the substrate, the first splicing strips extend to bottom surfaces that are of the spacing region and the first shallow trench isolation region and that are close to the substrate. In this way, the first splicing strip is directly a diffusion break, and this can reduce a structural requirement of a standard cell spliced with the first splicing strip for blocking diffusion.

In a possible implementation, the standard cell further includes two second splicing strips, the two second gate strips are located between the two second splicing strips in the second direction; and in the direction perpendicular to the substrate, the second splicing strips extend to bottom surfaces that are of the first active region and the second active region and that are close to the substrate. The second splicing strip is added to the standard cell, so that the width of the single side of the standard cell is extended at least two CPPs outwards, and diffusion break is implemented inside the standard cell. During use of the design, the standard cells may be directly abutted, and a spacing of at least one CPP does not need to be reserved.

In a possible implementation, the standard cell further includes two first extended active regions and two second extended active regions that are located on sides that are of the second splicing strips and that face the first splicing strips. In the second direction, the two spacing regions are located between the two first extended active regions, and the two first shallow trench isolation regions are located between the two second extended active regions. The first extended active region and the first active region are a same type of active regions, and the second extended active region and the second active region are a same type of active regions. Regions on two sides of the spacing region are set as the first extended active regions, and structures on two sides of the first shallow trench isolation region are set as the second extended active regions, so that performance of the standard cell can be improved.

In a possible implementation, the standard cell further includes a plurality of extended gate strips, and the extended gate strips are located on the side that is of the second splicing strip and that faces the second gate strip. The extended gate strip is added to the standard cell, to change the width of the standard cell without changing the performance of the standard cell, so as to meet requirements of different layout arrangements.

In a possible implementation, the second splicing strip, the extended gate strip, the first splicing strip, the second gate strip, and the first gate strip are arranged at equal spacings in the second direction. This is a possible implementation.

In a possible implementation, the standard cell further includes a gate via, and the gate via communicates with the first gate strip. This is a possible implementation.

According to a second aspect of embodiments of this application, an integrated circuit is provided, where the integrated circuit includes a first standard cell and a second standard cell, and the first standard cell and the second standard cell are disposed side by side in a direction intersecting with a first gate strip. The first standard cell is the standard cell according to any implementation of the first aspect, and/or the second standard cell is the standard cell according to any implementation of the first aspect.

Because the standard cells provided in the first aspect of embodiments of this application have a same splicing and alignment manner, different types of standard cells may be spliced at will. The integrated circuit may include all of a DDB standard cell, an MDB standard cell, and an SDB standard cell, to further improve performance of the integrated circuit or reduce power consumption of the integrated circuit with respective advantages of various types of standard cells while keeping an area of the integrated circuit unchanged, so as to further optimize performance of the integrated circuit.

In a possible implementation, the second standard cell is a single diffusion break standard cell. The single diffusion break standard cell includes two second diffusion breaks that are disposed in parallel with a second gate strip. A spacing region and a first shallow trench isolation region are located between the second gate strip and the second diffusion break that are abutted. In this way, the integrated circuit may include the SDB standard cell and the MDB standard cell or the DDB standard cell.

In a possible implementation, the spacing region and the first shallow trench isolation region are in contact with a side surface of the second diffusion break. The first standard cell included in the integrated circuit may be a standard cell that does not include a second splicing strip.

In a possible implementation, a first extended active region is further disposed between the second diffusion break and the spacing region, and a second extended active region is further disposed between the second diffusion break and the first shallow trench isolation region. The first standard cell included in the integrated circuit may be a standard cell including a second splicing strip.

In a possible implementation, the integrated circuit includes two third diffusion breaks parallel to the first gate strip, where the third diffusion break extends to a bottom surface that is of a first active region and that is close to a substrate. A spacing region of the first standard cell is disposed on a side that is of the third diffusion break and that faces the second gate strip, and a spacing region of the second standard cell is disposed on a side that is of the other of the third diffusion breaks and that faces an edge gate. The integrated circuit further includes a first splicing active region and a second splicing active region, where the first splicing active region and the second splicing active region are located between the two third diffusion breaks. In this way, the integrated circuit may include the MDB standard cell and/or the DDB standard cell.

In a possible implementation, each of the first standard cell and the second standard cell includes a second splicing strip, and the second splicing strip of the first standard cell coincides with the second splicing strip of the second standard cell. This is a possible structure.

In a possible implementation, the first standard cell includes a second splicing strip, and a spacing region of the second standard cell and a first shallow trench isolation region are in contact with a side surface of the second splicing strip. This is a possible structure.

In a possible implementation, the first standard cell and the second standard cell have a same structure. This is a possible structure.

In a possible implementation, a second gate strip of the first standard cell includes a first blocking gate, a first blocking part, and a first diffusion break, and a second gate strip of the second standard cell is located on a side that is of a first active region and a second active region and that is away from a substrate. This is a possible structure.

In a possible implementation, the integrated circuit includes a plurality of standard cell rows, and at least one first standard cell and/or second standard cell are/is disposed in each of the standard cell rows. This is a possible structure.

According to a third aspect of embodiments of this application, an electronic device is provided, including a circuit board and an integrated circuit, where the integrated circuit is the integrated circuit according to any implementation of the second aspect.

According to a fourth aspect of embodiments of this application, a standard cell library is provided, including a plurality of standard cells, where the plurality of standard cells include the standard cell according to any implementation of the first aspect and a single diffusion break standard cell.

### BRIEF DESCRIPTION OF DRAWINGS

FIG. 1A is a diagram of a framework of an electronic device according to an embodiment of this application;
FIG. 1B is a diagram of a framework of an SOC according to an embodiment of this application;
FIG. 2A is a diagram of a structure of a DDB standard cell according to a related technology;
FIG. 2B is a diagram of a structure of an MDB standard cell according to a related technology;
FIG. 2C is a diagram of a structure of an SDB standard cell according to a related technology;
FIG. 3A is a diagram of a structure of splicing a DDB standard cell with a DDB standard cell according to a related technology;
FIG. 3B is a diagram of a structure of splicing an MDB standard cell with an MDB standard cell according to a related technology;
FIG. 3C is a diagram of a structure of splicing an SDB standard cell with an SDB standard cell according to a related technology;
FIG. 4A is a diagram of a structure of a standard cell according to an embodiment of this application;
FIG. 4B is a diagram of a structure of another standard cell according to an embodiment of this application;
FIG. 5A is a diagram of a structure of an MDB standard cell according to an embodiment of this application;
FIG. 5B is a sectional view in a direction from A1 to A2 in FIG. 5A;
FIG. 6A is a diagram of a structure of a DDB standard cell according to an embodiment of this application;
FIG. 6B is a sectional view in a direction from B1 to B2 in FIG. 6A;
FIG. 7 is a diagram of a structure of still another standard cell according to an embodiment of this application;
FIG. 8A is a diagram of a structure of another MDB standard cell according to an embodiment of this application;
FIG. 8B is a sectional view in a direction from C1 to C2 in FIG. 8A;
FIG. 9A is a diagram of a structure of another DDB standard cell according to an embodiment of this application;
FIG. 9B is a sectional view in a direction from D1 to D2 in FIG. 9A;
FIG. 10A is a diagram of a structure of still another standard cell according to an embodiment of this application;
FIG. 10B is a diagram of a structure of still another standard cell according to an embodiment of this application;
FIG. 11A is a diagram of a structure of still another MDB standard cell according to an embodiment of this application;
FIG. 11B is a diagram of a structure of still another DDB standard cell according to an embodiment of this application;
FIG. 11C is a diagram of a structure of still another standard cell according to an embodiment of this application;
FIG. 12A is a diagram of a manner of splicing an SDB standard cell with an MDB standard cell according to an embodiment of this application;
FIG. 12B is a diagram of a manner of splicing an SDB standard cell with an MDB standard cell that does not include a first splicing strip according to an embodiment of this application;
FIG. 12C is a diagram of a manner of splicing an SDB standard cell with an MDB standard cell that includes a first splicing strip according to an embodiment of this application;
FIG. 12D is a diagram of another manner of splicing an SDB standard cell with an MDB standard cell according to an embodiment of this application;
FIG. 13A is a diagram of a structure of splicing an SDB standard cell with a DDB standard cell according to an embodiment of this application;
FIG. 13B is a diagram of another structure of splicing an SDB standard cell with a DDB standard cell according to an embodiment of this application;
FIG. 14A is a diagram of a structure of splicing an MDB standard cell with a DDB standard cell according to an embodiment of this application;
FIG. 14B is a diagram of another structure of splicing an MDB standard cell with a DDB standard cell according to an embodiment of this application;
FIG. 15A to FIG. 15C are diagrams of structures of splicing an MDB standard cell with an MDB standard cell according to an embodiment of this application;
FIG. 16 is a diagram of a structure of splicing an SDB standard cell and a DDB standard cell, with a DDB standard cell according to an embodiment of this application; and
FIG. 17A and FIG. 17B are diagrams of arrangements of an integrated circuit according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms such as "second" and "first" below are only for ease of description, and cannot be understood as indicating or implying relative importance or implicitly indicating a quantity of indicated technical features. Therefore, a feature limited by "second", "first", or the like may explicitly or implicitly include one or more features. In the descriptions of this application, unless otherwise stated, "a plurality of" means two or more than two.

In addition, in embodiments of this application, orientation terms such as "up", "down", "left", and "right" may include but are not limited to definitions based on illustrated orientations in which components in the accompanying drawings are placed. It should be understood that, these directional terms may be relative concepts, are used for relative description and clarification, and may correspondingly change based on changes in the orientations in which the components in the accompanying drawings are placed in the accompanying drawings.

In embodiments of this application, unless otherwise clearly specified and limited, a term "connection" should be understood in a broad sense. For example, the "connection" may be a fixed connection, a detachable connection, or an integrated connection, or may be a direct connection or an indirect connection implemented through an intermediate medium. In addition, the term "coupling" may be a direct electrical connection, or may be an indirect electrical connection through an intermediate medium. The term "contact" may be direct contact or indirect contact through an intermediate medium.

In embodiments of this application, the term "and/or" describes an association relationship between associated objects and may indicate that three relationships exist. For example, A and/or B may indicate the following cases: Only A exists, both A and B exist, and only B exists, where A and B may be singular or plural. The character "/" generally indicates an "or" relationship between the associated objects.

An embodiment of this application provides an electronic device. The electronic device is, for example, a consumer electronic product, a home electronic product, a vehicle-mounted electronic product, a financial terminal product, or a communication electronic product. The consumer electronic product is, for example, a mobile phone (mobile phone), a tablet computer (pad), a notebook computer, an e-reader, a personal computer (personal computer, PC), a personal digital assistant (personal digital assistant, PDA), a desktop display, an intelligent wearable product (for example, a smart watch or a smart band), a virtual reality (virtual reality, VR) terminal device, an augmented reality (augmented reality, AR) terminal device, or an uncrewed aerial vehicle. The home electronic product is, for example, a smart door lock, a television, a remote control, a refrigerator, a small household charging appliance (for example, a soy milk maker or a robot vacuum), or the like. The vehicle-mounted electronic product is, for example, a vehicle-mounted navigator or a vehicle-mounted high-density digital video disc (digital video disc, DVD). The financial terminal product is, for example, an automated teller machine (automated teller machine, ATM), a terminal for self-service business handling, or the like. For example, the communication electronic product is a communication device like a server, a memory, a radar, or a base station.

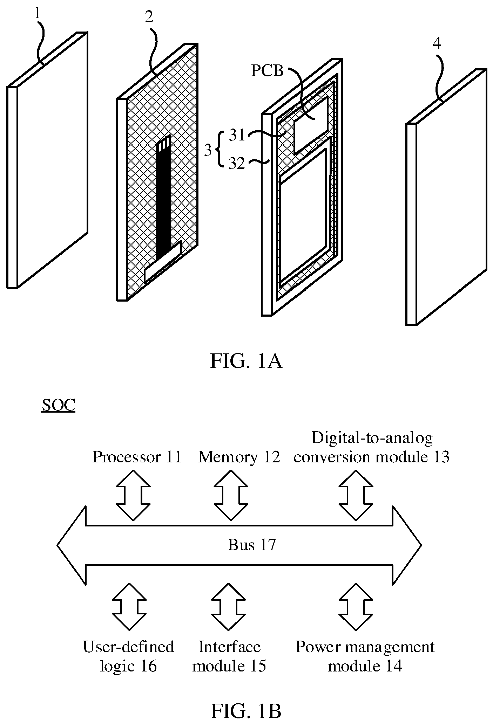

For ease of description, the following uses an example in which the electronic device is a mobile phone for description. As shown in FIG. 1A, the electronic device mainly includes a cover 1, a display 2, a middle frame 3, and a rear housing 4. The rear housing 4 and the display 2 are respectively located on two sides of the middle frame 3, the middle frame 3 and the display 2 are disposed in the rear housing 4, the cover 1 is disposed on a side that is of the display 2 and that is away from the middle frame 3, and a display surface of the display 2 faces the cover 1.

The display 2 may be a liquid crystal display (liquid crystal display, LCD). In this case, the liquid crystal display includes a liquid crystal display panel and a backlight module. The liquid crystal display panel is disposed between the cover 1 and the backlight module, and the backlight module is configured to provide a light source for the liquid crystal display panel. The display 2 may alternatively be an organic light emitting diode (organic light emitting diode, OLED) display. Because the OLED display is a self-luminous display, no backlight module needs to be disposed.

The middle frame 3 includes a bearing plate 31 and a bezel 32 around the bearing plate 31. The electronic device may further include electronic components such as a printed circuit board (printed circuit board, PCB), a battery, and a camera. The electronic components such as the printed circuit board, the battery, and the camera may be disposed on the bearing plate 31.

The electronic device may further include a system on chip (system on chip, SOC), a radio frequency chip, and the like that are disposed on the PCB. The PCB is configured to carry the system on chip, the radio frequency chip, and the like, and is electrically connected to the system on chip, the radio frequency chip, and the like.

An embodiment of this application further provides an SOC. For example, as shown in FIG. 1B, the SOC includes a processor 11, a memory 12, a digital-to-analog conversion module (ADC/DAC) 13, a power management module 14, an interface module 15, and user-defined logic 16. The foregoing structure may be coupled to a bus 17 to perform communication.

The processor 11 may execute a specific calculation or task. The processor 11 may include, for example, a microprocessor, a central processing unit (CPU), a digital signal processor DSP, and the like. The memory 12 may store data required for operating the SOC. For example, the memory 12 may be a dynamic random access memory (dynamic random access memory, DRAM), a static random-access memory (static random-access memory, SRAM), a ferroelectric random access memory (ferroelectric random access memory), a magnetic random access memory (magnetic random access memory, MRAM), or the like. The digital-to-analog conversion module 13 is configured to implement conversion between a data signal and an analog signal. The power management module 14 is configured to supply power to each module in the SOC. The interface module 15 is configured to implement communication between the SOC and the outside. The user-defined logic 16 or another digital module may be, for example, an application specific integrated circuit (application specific integrated circuit, ASIC) formed by a field programmable gate array (field programmable gate array, FPGA) or a complex programmable logic device (complex programmable logic device, CPLD). The bus 17 may include, for example, an address bus, a control bus, a data bus, or an extension bus.

Modules such as an out-of-order/integer execution (out of order integer executive, OEX) module, an FPGA, and a CPLD in a core of the CPU may be used, for example, to implement layout design (design) through electronic design automation (electronic design automation, EDA). The EDA refers to a design mode of using computer aided design (computer aided design, CAD) software to complete function design, synthesis, verification and physical design (including arrangement, cabling, layout, design rule check, and the like) of a very large scale integration (very large scale integration, VLSI) chip.

The EDA is used to retrieve standard cells from a standard cell library and stitch the standard cells together to complete a design of an integrated circuit.

In the conventional technology, in a standard cell library of a fin field-effect transistor (fin field-effect transistor, FinFET) technology node, standard cells (standard cells, STCs) are classified based on types of isolation between the standard cells. The standard cells may be classified into three types: a double diffusion break (double diffusion break, DDB) standard cell, a single diffusion break (single diffusion break, SDB) standard cell, and a mix diffusion break (mix diffusion break, MDB) standard cell.

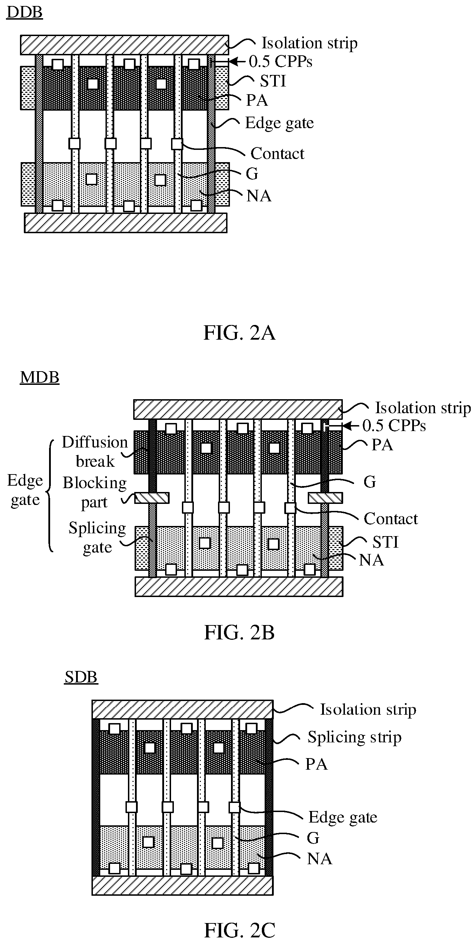

As shown in FIG. 2A, the DDB standard cell includes a plurality of first gate strips G, two edge gates, a P-type active (P active, PA) region, and an N-type active (N active, NA) region. The edge gates and the first gate strips G are disposed at a same layer, and are located above the P-type active PA region and the N-type active NA region. The two edge gates are located on two sides of the plurality of first gate strips G. From a top view, the P-type active PA region and the N-type active NA region are located between the two edge gates. Contacts (contacts) are correspondingly provided on the first gate strips G, in the P-type active PA region, and in the N-type active NA region, and no contact is provided on the edge gates. The P-type active PA region, the N-type active NA region, the edge gates, and the first gate strips are located between two isolation strips (poly cuts).

From the top view, a shallow trench isolation (shallow trench isolation, STI) region is further disposed on an outer side that is of an edge gate of the DDB standard cell and that is away from the first gate strip G, and a distance between an edge of the STI and the edge gate is approximately half of a distance (or understood as a contact poly pitch (contact poly pitch, CPP)) (0.5 CPP) between abutted first gate strips G. In other words, to implement isolation between P-type active PA regions and between N-type active NA regions of abutted standard cells, a border of the DDB standard cell is at a location of 0.5 CPP outwards the edge gate, and the STI is disposed to reserve a spacing for blocking the P-type active PA region and the N-type active NA region.

As shown in FIG. 2B, the MDB standard cell includes a plurality of first gate strips G, two edge gates, a P-type active PA region, and an N-type active NA region. The two edge gates are located on two sides of the plurality of first gate strips G, and the first gate strips G are located above the P-type active PA region and the N-type active NA region. The edge gate includes a diffusion break, a blocking gate, and a blocking part that separates the diffusion break and the blocking gate. The diffusion break runs through the P-type active PA region to perform a blocking function, and the blocking gate is located above the N-type active NA region. Contacts are correspondingly provided on the first gate strips G, in the P-type active PA region, and in the N-type active NA region, and no contact is provided on the edge gates. The P-type active PA region, the N-type active NA region, the edge gates, and the first gate strips are located between two isolation strips.

From a top view, the P-type active PA region extends outwards the edge gate, an STI is disposed outside the N-type active NA region, a distance from an edge of the P-type active PA region to the edge gate is approximately 0.5 CPP, and a distance from an edge of the STI to the edge gate is approximately 0.5 CPP. In other words, to implement isolation between N-type active NA regions of abutted standard cells, a border of the MDB standard cell is at a location of 0.5 CPP outwards the edge gate, and the STI is disposed to reserve a spacing for blocking the N-type active NA region. When the border of the MDB standard cell is at the location of 0.5 CPP outwards the edge gate, the P-type active PA region is blocked by the diffusion break, and a P-type active PA region may be formed outside the diffusion break, to improve performance of the standard cell.

As shown in FIG. 2C, the SDB standard cell includes a plurality of first gate strips G, two edge gates, a P-type active PA region, and an N-type active NA region. The two edge gates are located on two sides of the plurality of first gate strips G, and the first gate strips G are located above the P-type active PA region and the N-type active NA region. The edge gate is a diffusion break, runs through the P-type active PA region and the N-type active NA region, and the P-type active PA region and the N-type active NA region are located between the two edge gates. Contacts are correspondingly provided on the first gate strips G, in the P-type active PA region, and in the N-type active NAregion, and no contact is provided on the edge gates. The P-type active PAregion, the N-type active NA region, the edge gates, and the first gate strips are located between two isolation strips.

From a top view, a center line of the edge gate of the SDB standard cell is a border of the SDB standard cell. In other words, the P-type active PA region and the N-type active NA region are blocked by the diffusion break, and the border of the SDB standard cell does not need to extend outwards the edge gate. Therefore, left and right ends of the DDB standard cell and MDB standard cell each extend by about 0.5 CPP in comparison with left and right ends of the SDB standard cell.

The DDB standard cell may save two masks (masks) for preparing the diffusion break, thereby having lower preparation costs. Both the active region and an insulation layer of the SDB standard cell do not need to extend outwards the edge gate, thereby having a smaller design area. Based on a layout dependent effect (layout dependent effect, LDE), the MDB standard cell combines the DDB standard cell and the SDB standard cell, to increase a speed of the MDB standard cell in comparison with that of the SDB standard cell or that of the DDB standard cell, so that the MDB standard cell has better performance. The three types of standard cells have respective advantages. In the conventional technology, a manufacturing factory (a foundry) provides a plurality of sets of standard cell libraries to meet performance and power consumption requirements of different products. Generally, there are a high performance (high performance, HP) standard cell library and a high density (high density, HD) standard cell library. The HP standard cell library is implemented based on the DDB standard cell, and the HD standard cell library is implemented based on the SDB standard cell.

As shown in Table 1, an out-of-order execution module in a CPU core is used as an example. A performance, power consumption, area (performance power area, PPA) indicator comparison is performed between the module implemented based on the MDB standard cell and the module implemented based on the SDB standard cell. Physical synthesis implementations are compared under a condition in which a power supply voltage VDD is 0.6 V, a temperature is 85°C, and a typical corner (typical corner, TT) is TT 0 (namely, tt0p6v85c in Table 1) and a condition in which a power supply voltage VDD is 1.0 V, a temperature is 85°C, and a typical corner (typical corner, TT) is TT 1 (namely, tt1p0v85c in Table 1). It is found that a speed (speed) of the MDB standard cell is 2% to 8% higher than that of the SDB standard cell, but an area of the MDB standard cell is 5% to 12% larger than that of the SDB standard cell. Use of the MDB standard cell increases an area of a chip, resulting in an increase in costs of the chip. In addition, leakage (leakage) power consumption of the MDB standard cell is more than 25% higher than that of the SDB standard cell. For consumer products, the leakage power consumption is an important indicator, and an increase in the leakage power consumption is unacceptable.

**Table 1 Module-level PPA comparison between MDB and SDB**

| MDB vs SDB | tt0p6v85c | tt1p0v85c |
|---|---|---|
| Area (µm²) | 105% | 112% |
| Speed (Ghz) | 108% | 102% |
| Leakage (W) | 123% | 130% |
| Power consumption (W/Ghz) | 94% | 98% |

Therefore, the MDB standard cell, the SDB standard cell, and the DDB standard cell have respective advantages and disadvantages, and if the MDB standard cell, the SDB standard cell, and the DDB standard cell can be used together in a same integrated circuit, performance of the integrated circuit can be effectively improved.

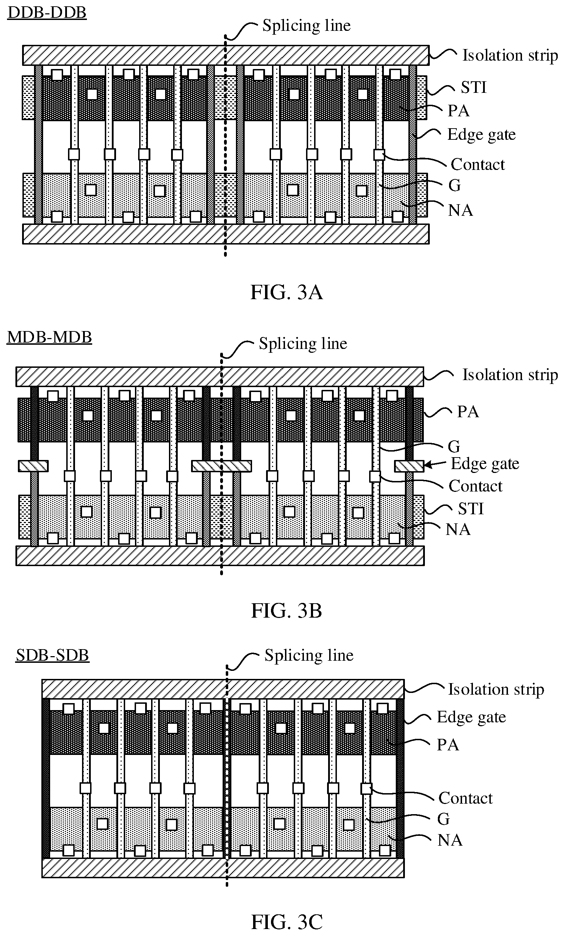

However, because the left and right ends of the MDB standard cell and the DDB standard cell each extend by about 0.5 CPP in comparison with the left and right ends of the SDB standard cell, as shown in FIG. 3A, when two DDB standard cells are spliced, a splicing line is located between edge gates of the two DDB standard cells, and a distance between the splicing line and the edge gate is approximately 0.5 CPP. As shown in FIG. 3B, when two MDB standard cells are spliced, a splicing line is located between edge gates of the two MDB standard cells, and a distance between the splicing line and the edge gate is approximately 0.5 CPP. As shown in FIG. 3C, when two SDB standard cells are spliced, a splicing line is located on a middle line of edge gates of the SDB standard cells, and the edge gates of the two SDB standard cells overlap. The three types of standard cells have different splicing and alignment modes. As a result, standard cells of a same height (or heights are in an integer multiple relationship) and different types cannot be compatible in a same integrated circuit. An EDA tool does not support direct mixing of an MDB standard cell and a DDB standard cell with an SDB standard cell in a same integrated circuit. For example, regardless of whether the integrated circuit is implemented based on the HP standard cell library or the HD standard cell library, the integrated circuit is designed based on a single type of standard cell. However, hybrid diffusion (hybrid diffusion break, HDB) of different types of standard cells can be used to achieve a more optimized design.

To resolve a problem that different types of standard cells cannot be compatible with each other in an integrated circuit, an embodiment of this application provides a new DDB standard cell and MDB standard cell, so that standard cells of a same type can be spliced with each other, and different types of standard cells can also be spliced with each other.

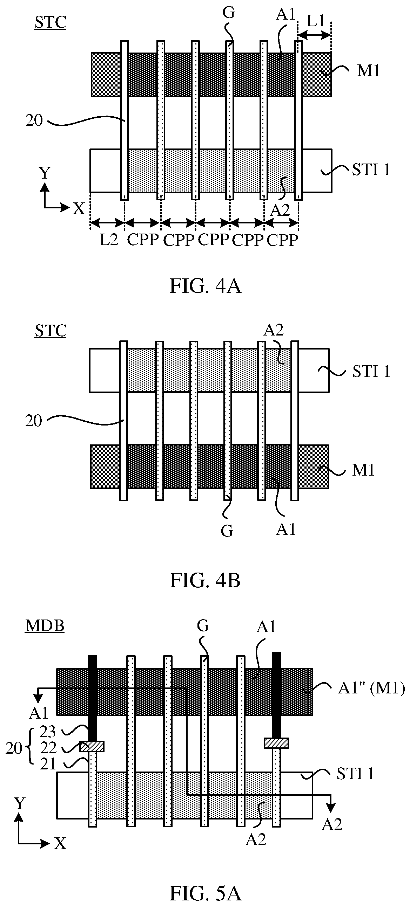

As shown in FIG. 4A, an embodiment of this application provides a standard cell (standard cell) STC. The standard cell STC includes a first active region A1, a second active region A2, at least one first gate strip G, two second gate strips 20, two spacing regions M1, and two first shallow trench isolation regions STI 1 that are disposed on one side of a substrate (not shown in FIG. 4A). In FIG. 4A, an example in which the standard cell includes a plurality of first gate strips G is used for illustration.

The standard cell STC provided in this embodiment of this application may include a substrate, or may not include a substrate. In this embodiment of this application, an example in which the standard cell STC includes a substrate is used for illustration. In this embodiment of this application, the substrate is not marked in a top view, and a relative location relationship between the substrate, and the first active region A1 and the second active region A2 may be seen from a sectional view shown below.

The first active region A1 and the second active region A2 are an N-type active region and a P-type active region for each other. The first active region A1 and the second active region A2 are disposed side by side on the substrate 10 in a first direction Y. Both the first active region A1 and the second active region A2 extend in a second direction X.

The N-type active region is formed by doping an N-type impurity in a semiconductor, and the P-type active region is formed by doping a P-type impurity in a semiconductor. In this embodiment of this application, the second direction X intersects with (for example, is perpendicular to) the first direction Y. That the first active region A1 and the second active region A2 are an N-type active region and a P-type active region for each other may be understood as that the first active region A1 is one of the N-type active region and the P-type active region, and the second active region A2 is the other of the N-type active region and the P-type active region. For example, a first row is a P-type active region row, and a second row is an N-type active region row. For example, as shown in FIG. 4A, the first active region A1 is a P-type active region, and the second active region A2 is an N-type active region. Alternatively, for example, as shown in FIG. 4B, the second active region A2 is a P-type active region, and the first active region A1 is an N-type active region. For ease of description, the following uses an example in which the first active region A1 is a P-type active region and the second active region A2 is an N-type active region.

In some embodiments, the standard cell STC further includes at least one first fin and at least one second fin. The first fin and the second fin are not shown in FIG. 4A or FIG. 4B. The first fin is located above the first active region A1, the first fin extends to an edge of the standard cell STC in the second direction X, and a plurality of first fins are arranged in the first direction Y. The second fin is located above the second active region A2, the second fin extends to an edge of the standard cell STC in the second direction X, and a plurality of second fins are arranged in the first direction Y.

The first gate strip G extends in the first direction Y, and is located above the first active region A1 and the second active region A2 (the first gate strip G is located on a side that is of the first fin and the second fin and that is away from the first active region A1 and the second active region A2). In other words, a projection of the first gate strip G on a plane on which the substrate is located overlaps a projection of the first active region A1 and a projection of the second active region A2 on the plane on which the substrate is located. Alternatively, it is understood that the first gate strip G spans the first active region A1 and the second active region A2. When the standard cell STC includes a plurality of first gate strips G, the plurality of first gate strips G are arranged in the second direction X.

In the first gate strip G, a part that spans the first active region A1 and a part that spans the second active region A2 may be disconnected, or a part that spans the first active region A1 and a part that spans the second active region A2 may alternatively be coupled. In this embodiment of this application, an example in which the two parts are coupled is used.

The second gate strip 20 extends in the first direction Y, the two second gate strips 20 and the at least one first gate strip G are arranged in the second direction X, and the at least one first gate strip G is located between the two second gate strips 20. For example, the two second gate strips 20 and the at least one first gate strip G are arranged at equal spacings in the second direction X. The spacing is, for example, a CPP. A spacing between the second gate strip 20 and the first gate strip G may be, for example, a distance between a middle line of the second gate strip 20 and a middle line of the first gate strip G. A spacing between two abutted first gate strips G may be, for example, a spacing between a middle line of one first gate strip G and a middle line of the other first gate strip G.

It may be understood that "equal spacing" in this embodiment of this application does not require that the spacings be completely equal. That the spacings are approximately equal also belongs to equal spacing arrangement in this embodiment of this application. A spacing change within a process error range (for example, ±1.5%) belongs to the equal spacing in this embodiment of this application.

In the second direction X, two ends of the second active region A2 are located below the two second gate strips 20 (a side close to the substrate 10), and an end of the first active region A1 is flush with or approximately flush with an end of the second active region A2. Alternatively, it is understood that the projections of the first active region A1 and the second active region A2 on the plane on which the substrate is located are located between projections of the two second gate strips 20 on the plane on which the substrate is located.

The spacing region M1 is located on an extension line of the first active region A1, and the first active region A1 is located between the two spacing regions M1 in the second direction X. A border between the first active region A1 and the spacing region M1 may be, for example, located at the middle line (extending in the first direction Y) of the second gate strip 20.

The second gate strip 20 cooperates with the spacing region M1 to break the first active region A1. The second gate strip 20 and the spacing region M1 are described in detail subsequently, and details are not described herein.

The first shallow trench isolation region STI 1 1 is located on an extension line of the second active region A2, and the second active region A2 is located between the two first shallow trench isolation regions STI 1 in the second direction X. A border between the second active region A2 and the first shallow trench isolation region STI 1 1 may be, for example, located at the middle line (extending in the first direction Y) of the second gate strip 20.

As shown in FIG. 4A, in the second direction X, a width L1 of the spacing region M1 and a width L2 of the first shallow trench isolation region STI 1 1 are equal to the arrangement spacing (for example, the CPP) between the second gate strip 20 and the first gate strip G in the second direction X. The width L1 of the spacing region M1 may be, for example, a distance from an end of the spacing region M1 to the middle line of the second gate strip 20. The width L2 of the first shallow trench isolation region STI 1 1 may be, for example, a distance from an end of the first shallow trench isolation region STI 1 1 to the middle line of the second gate strip 20.

According to the standard cell STC provided in this embodiment of this application, a width of a part that is in the standard cell STC and that diffuses outwards the second gate strip 20 is set to CPP but not 0.5 CPP. In other words, the standard cell STC extends one CPP on one side in comparison with the conventional SDB standard cell, and each side of the standard cell STC diffuses one CPP outwards the second gate strip 20 in the second direction X. In this case, when the standard cells STCs are spliced, a distance between the splicing line and the second gate strip 20 is an integer multiple of CPP. Therefore, standard cells STCs of different types may be directly abutted (abutted) to implement mixed splicing of the standard cells STCs of different types. A problem that standard cells STCs of a same height (or heights are in an integer multiple relationship) and different types cannot be compatible with each other in an integrated circuit due to different splicing and alignment manners between the standard cells STCs is resolved, thereby implementing application of an HDB technology.

Based on different structures of the second gate strip 20, the standard cell STC may be classified into an MDB standard cell and a DDB standard cell.

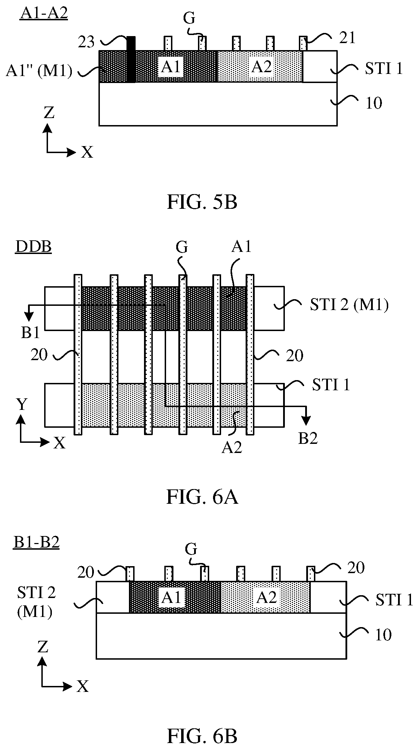

In an implementation, as shown in FIG. 5A, the standard cell STC is an MDB standard cell. It can be learned with reference to FIG. 5A and FIG. 5B (a sectional view in a direction from A1 to A2 in FIG. 5A), that a second gate strip 20 includes a first blocking gate 21, a first blocking part 22, and a first diffusion break (diffusion break) 23.

As shown in FIG. 5B, in a direction perpendicular to the substrate 10 (a third direction Z perpendicular to the first direction Y and the second direction X), the first diffusion break 23 extends to a bottom surface that is of the first active region A1 and that is close to the substrate 10. In other words, the first active region A1 and the spacing region M1 on two sides of the first diffusion break 23 are separated by the first diffusion break 23, and diffusion of the first active region A1 is blocked by the first diffusion break.

As shown in FIG. 5B, in the third direction Z, the first blocking gate 21 is located on a side that is of the second active region A2 and that is away from the substrate 10. For example, the first blocking gate 21 and the first gate strip G are disposed at a same layer (which are formed synchronously according to a same process). In other words, the second active region A2 and the first shallow trench isolation region STI 1 1 are not separated by the first blocking gate 21, the second active region A2 is in contact with the first shallow trench isolation region STI 1 1, and the first shallow trench isolation region STI 1 1 blocks diffusion of the second active region A2.

In the first direction Y, the first blocking part 22 is located between the first blocking gate 21 and the first diffusion break 23. In other words, the first blocking gate 21 and the first diffusion break 23 are separated by the first blocking part 22. In a thickness direction (vertical to the third direction Z of the substrate 10) of the MDB standard cell, a lower surface that is of the first blocking part 22 and that is close to the substrate 10 may be located on a same plane as a lower surface that is of the first blocking gate 21 and that is close to the substrate 10. The lower surface of the first blocking part 22 may alternatively be located on a same plane as a lower surface of the first diffusion break 23. A material of the first blocking part 22 may be, for example, a dielectric material.

In some embodiments, the first blocking part 22 is of an axisymmetric structure, and a symmetry axis is the central line of the second gate strip 20. Certainly, the first blocking part 22 may alternatively be in another shape.

In some embodiments, an insulation layer (for example, a SiO₂ layer) is further disposed on surfaces of the first active region A1 and the second active region A2, the insulation layer fills the first active region A1 and the second active region A2, and the second gate strip 20 is disposed on the insulation layer.

When the standard cell STC is an MDB standard cell, in some embodiments, the spacing region M1 is a shallow trench isolation region.

In some other embodiments, the spacing region M1 is an active region, and the spacing region M1 and the first active region A1 are active regions A1" of a same type.

For example, the first active region A1 is a P-type active region, and the spacing region M1 is also a P-type active region. The second active region A2 is an N-type active region, and the spacing region M2 is also an N-type active region.

In FIG. 5B, an example in which the MDB standard cell includes the substrate 10 is used for illustration. The substrate 10 carries the first active region A1 and the second active region A2.

In another implementation, as shown in FIG. 6A, the standard cell STC is a DDB standard cell. With reference to FIG. 6A and FIG. 6B (a sectional view in a direction from B1 to B2 in FIG. 6A), it can be learned that the second gate strip 20 is located above the first active region A1 and the second active region A2 (on a side away from the substrate 10), and the spacing region M1 is a second shallow trench isolation region STI 2.

For example, the second gate strip 20 and the first gate strip G are disposed at a same layer (which are formed synchronously according to a same process). In this case, the second gate strip 20 may be referred to as a dummy gate.

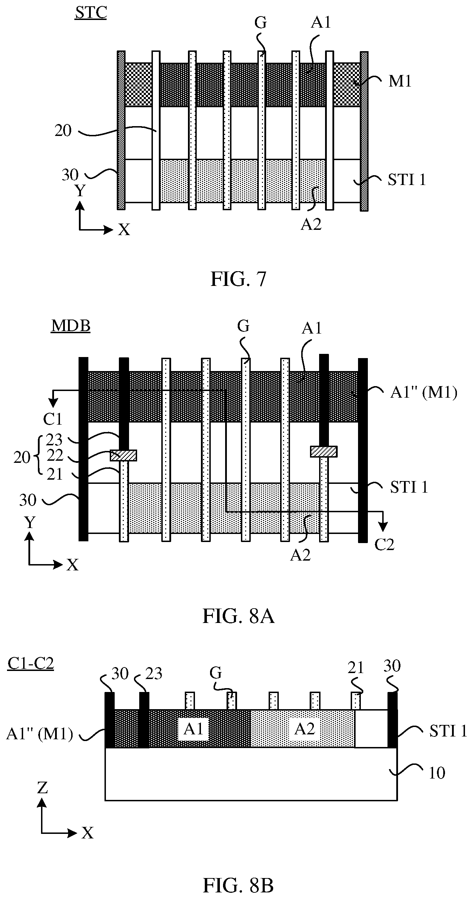

In some embodiments, as shown in FIG. 7, the standard cell STC further includes two first splicing strips 30.

The first splicing strip 30 extends in the first direction Y. The two second gate strips 20 and the at least one first gate strip G are located between the two first splicing strips 30 in the second direction X. The two first splicing strips 30, the two second gate strips 20, and the at least one first gate strip G are arranged at an equal interval. For example, a distance between the first splicing strip 30 and the second gate strip 20 is equal to the arrangement spacing (for example, the CPP) between the second gate strip 20 and the first gate strip G in the second direction X.

In some embodiments, with reference to FIG. 8A and FIG. 8B (a sectional view in a direction from C1 to C2 in FIG. 8A), in the direction (the third direction Z) perpendicular to the substrate 10, the first splicing strip 30 is a diffusion break, and the first splicing strips 30 extend to bottom surfaces of the spacing region M1 and the first shallow trench isolation region STI 1 1.

For example, as shown in FIG. 8A and FIG. 8B, the standard cell STC is an MDB standard cell, and the first splicing strip 30 and the first diffusion break 23 are disposed at a same layer.

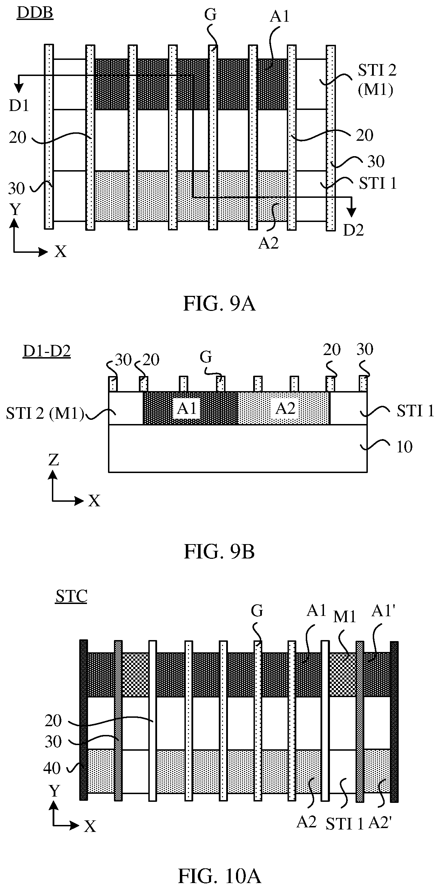

In some other embodiments, with reference to FIG. 9A and FIG. 9B (a sectional view in a direction from D1 to D2 in FIG. 9A), in the direction (the third direction Z) perpendicular to the substrate 10, the first splicing strips 30 and the first gate strip G are disposed at a same layer. For example, the first splicing strip 30 is disposed above the spacing region M1 and the first shallow trench isolation region STI 1 1 (on a side away from the substrate 10).

For example, as shown in FIG. 9A and FIG. 9B, the standard cell STC is a DDB standard cell, and the first splicing strips 30 and the first gate strip G are disposed at a same layer.

In comparison with the SDB standard cell having the first gate strip G with a same quantity of strips, the standard cell STC increases a width of two CPPs in the second direction X. When the first active region A1 is a P-type active region, and the second active region A2 is an N-type active region, it is found through physical comprehensive implementation that a speed of the standard cell STC may be increased by about 8%, and leakage power consumption may be increased by about 30%. When the standard cell STC is used together with the SDB standard cell, the standard cell STC is used on a time sequence critical path, and the SDB standard cell is used on a time sequence non-critical path, so that a design speed and energy efficiency can be improved under a same area and power consumption.

When the second active region A2 in the standard cell STC is a P-type active region, and the first active region A1 is an N-type active region, it is found through physical comprehensive implementation that a speed of the standard cell STC is reduced by about 3%, and leakage power consumption is reduced by about 25%. When the standard cell STC is used together with the SDB standard cell, leakage power consumption of the integrated circuit may be further reduced.

In some embodiments, as shown in FIG. 10A, the standard cell STC further includes two second splicing strips 40.

The two first splicing strips 30, the two edge gates 20, and the at least one first gate strip G are all located between the two second splicing strips 40 in the second direction X. The two second splicing strips 40, the two first splicing strips 30, the two second gate strips 20, and the at least one first gate strip G are arranged at equal spacings. For example, a distance from the second splicing strip 40 to the first splicing strip 30 is equal to the arrangement spacing (for example, the CPP) between the second gate strip 20 and the first gate strip G in the second direction X.

The second splicing strip 40 is a diffusion break, and second splicing strip 40 extends in the third direction Z to a plane on which bottom surfaces of the first active region A1 and the second active region A2 are located.

In some embodiments, as shown in FIG. 10A, the standard cell STC further includes two first extended active regions A1' and two second extended active regions A2' that are located on sides that are of the second splicing strips 40 and that face the first splicing strips 30.

In the second direction X, the first extended active region A1' is located on an extension line of the first active region A1, the first extended active region A1' is spliced with the spacing region M1, and the two spacing regions M1 are located between the two first extended active regions A1'. The second extended active region A2' is located on an extension line of the second active region A2, the second extended active region A2' is spliced with the first shallow trench isolation region STI 1 1, and the two first shallow trench isolation regions STI 1 are located between the two second extended active regions A2'.

The first extended active region A1' and the first active region A1 are a same type of active regions, and the second extended active region A2' and the second active region A2 are a same type of active regions.

For example, the first extended active region A1' and the first active region A1 are P-type active regions, and the second extended active region A2' and the second active region A2 are N-type active regions.

In some other embodiments, trench isolation structures are disposed at locations at which the first extended active region A1' and the two second extended active regions A2' are disposed.

In this way, in the second direction X, in comparison with that of the standard cell STC shown in FIG. 7, a width of the standard cell STC is increased by one CPP, but the width of the standard cell STC is still an integer multiple of the CPP.

The second splicing strip 40 is added to the standard cell STC, a width of a single side of the standard cell STC is extended at least two CPPs outwards, and diffusion interrupt is implemented inside the standard cell STC. During use of the design, standard cells STCs may be directly abutted (abut), a spacing (spacing) of at least one CPP does not need to be reserved, and the standard cells STCs may be directly spliced.

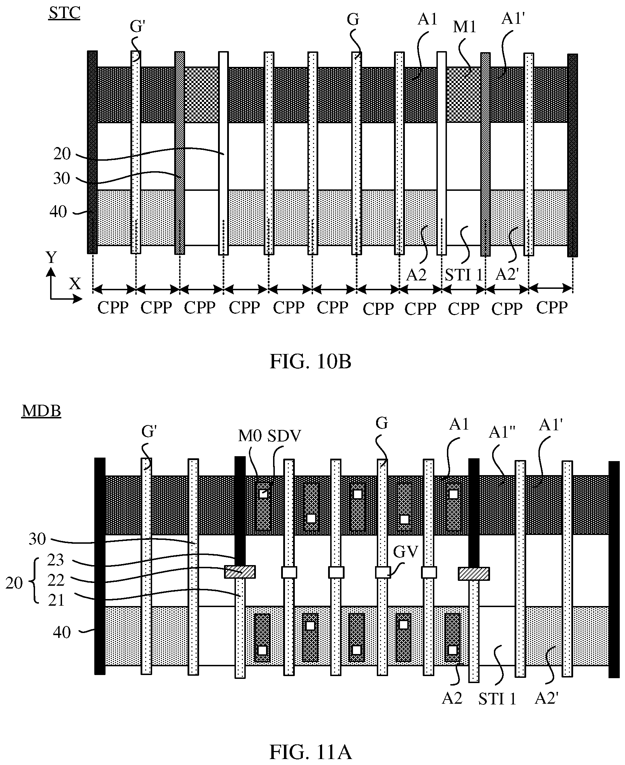

In some embodiments, as shown in FIG. 10B, the standard cell STC further includes a plurality of extended gate strips G', and the extended gate strip G' is located between the first splicing strip 30 and the second splicing strip 40. For example, the extended gate strip G' and the first gate strip G are disposed at a same layer.

For example, from a perspective of FIG. 10B, a quantity of extended gate strips G' between the first splicing strip 30 and the second splicing strip 40 on the left side is equal to a quantity of extended gate strips G' between the first splicing strip 30 and the second splicing strip 40 on the right side.

In FIG. 10B, an example in which one extended gate strip G' is disposed between the first splicing strip 30 and the second splicing strip 40 is used for illustration. A plurality of extended gate strips G' may alternatively be disposed between the first splicing strip 30 and the second splicing strip 40, to adjust a layout arrangement of the standard cell STC.

The extended gate strips G' are added to the standard cell STC, to change the width of the standard cell STC without changing the performance of the standard cell STC, so as to meet requirements of different layout arrangements.

In some embodiments, as shown in FIG. 10B, the second splicing strip 40, the extended gate strip G', the first splicing strip 30, the second gate strip 20, and the first gate strip G are arranged at equal spacings in the second direction X.

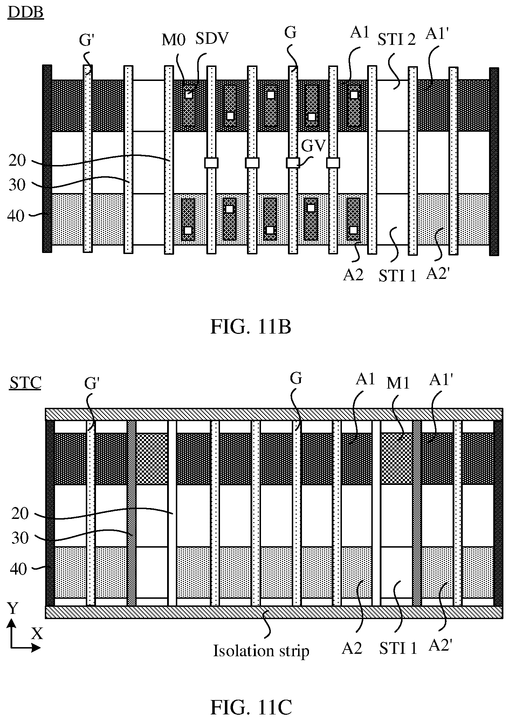

In some embodiments, as shown in FIG. 11A and FIG. 11B, the standard cell further includes a gate via (gate via, GV) and a source drain via (source drain via, SDV).

The gate via GV communicates with the first gate strip G. In other words, a projection of the gate via GV on the plane on which the substrate is located overlaps a projection of the first gate strip G on the plane on which the substrate is located. In a subsequent wiring process, a gate line is coupled to the first gate strip G through the gate via GV.

In some embodiments, a gate via GV is also correspondingly disposed above the extended gate strip G' (on a side away from the substrate 10). The extended gate strip G', the first fin, and the second fin form a transistor, to improve performance of the standard cell STC.

The source drain via SDV located above the first active region A1 (on the side away from the substrate 10) communicates with a part that is of the first fin and that is used as a source. When the standard cell STC includes a plurality of first fins, for example, a connection part M0 is disposed on a side that is of the plurality of first fins and that is away from the substrate, the connection part M0 is coupled to the plurality of first fins, and the source drain via SDV communicates with the connection part M0, so that the source drain via SDV communicates with the part that is of the first fin and that is used as the source.

The source drain via SDV located above the second active region A2 (on the side away from the substrate 10) communicates with a part that is of the second fin and that is used as a source. When the standard cell STC includes a plurality of second fins, for example, a connection part M0 is disposed on a side that is of the plurality of second fins and that is away from the substrate, the connection part M0 is coupled to the plurality of second fins, and the source drain via SDV communicates with the connection part M0, so that the source drain via SDV communicates with the part that is of the second fin and that is used as the source.

Similarly, the source drain via SDV located above the first active region A1 (on the side away from the substrate 10) communicates with a part that is of the first fin and that is used as a drain. When the standard cell STC includes a plurality of first fins, for example, a connection part M0 is disposed on a side that is of the plurality of first fins and that is away from the substrate, the connection part M0 is coupled to the plurality of first fins, and the source drain via SDV communicates with the connection part M0, so that the source drain via SDV communicates with the part that is of the first fin and that is used as the drain.

The source drain via SDV located above the second active region A2 (on the side away from the substrate 10) communicates with a part that is of the second fin and that is used as a drain. When the standard cell STC includes a plurality of second fins, for example, a connection part M0 is disposed on a side that is of the plurality of second fins and that is away from the substrate, the connection part M0 is coupled to the plurality of second fins, and the source drain via SDV communicates with the connection part M0, so that the source drain via SDV communicates with the part that is of the second fin and that is used as the drain.

The connection part M0 located above the first active region A1 (on the side away from the substrate 10) and the connection part M0 located above the second active region A2 (on the side away from the substrate 10) are insulated from each other, and the connection part M0 coupled to the source and the connection part M0 coupled to the drain are insulated from each other.

For clarity of illustration, when the standard cell STC is illustrated below, the first fin, the second fin, the gate via GV, and the source drain via SDV in the standard cell STC are not illustrated.

In some embodiments, as shown in FIG. 11C, the standard cell STC further includes two isolation strips (poly cut). The isolation strip extends in the second direction X. The first active region A1 and the second active region A2 are located between the two isolation strips, and the first gate strip G is located between the isolation strips.

Certainly, the isolation strip may non-disruptively extend from the second splicing strip 40 on the left side to the second splicing strip 40 on the right side. Alternatively, the isolation strip may disruptively extend from the second splicing strip 40 on the left side to the second splicing strip 40 on the right side, that is, the isolation strip may include a plurality of disruptive parts. FIG. 11C is merely an example, and does not impose any limitation. Certainly, the standard cell STC may not include an isolation strip.

In some embodiments, the standard cell STC includes a plurality of first active regions A1 and a plurality of second active regions A2, and the active regions are arranged in a regular manner similar to the first active region A1, the second active region A2, the second active region A2, the first active region A1, the first active region A1, and the second active region A2.

It should be noted that the standard cell STC provided in this embodiment of this application may be a standard cell having a logical function, or the standard cell STC may be a physical (physical) padding standard cell. This is not limited in this embodiment of this application.

An embodiment of this application further provides a standard cell library, including any one of the foregoing standard cells STCs. The standard cell library is an input part of EDA, and the standard cell library is invoked by a software program to complete a design of an integrated circuit.

In this embodiment of this application, the standard cell STC in the standard cell library is optimized, so that the EDA obtains a better splicing solution when invoking the standard cell library, to optimize performance of a finally formed integrated circuit.

An embodiment of this application provides an integrated circuit. The integrated circuit includes a plurality of standard cells STCs, the plurality of standard cells STCs are arranged in a second direction X, and at least one of the plurality of standard cells STCs STC is any one of the foregoing standard cells STCs. The plurality of standard cells STCs may be standard cells STCs of a same type, or the plurality of standard cells STCs may be standard cells STCs of different types.

In a possible case, a first standard cell and a second standard cell are different types of standard cells.

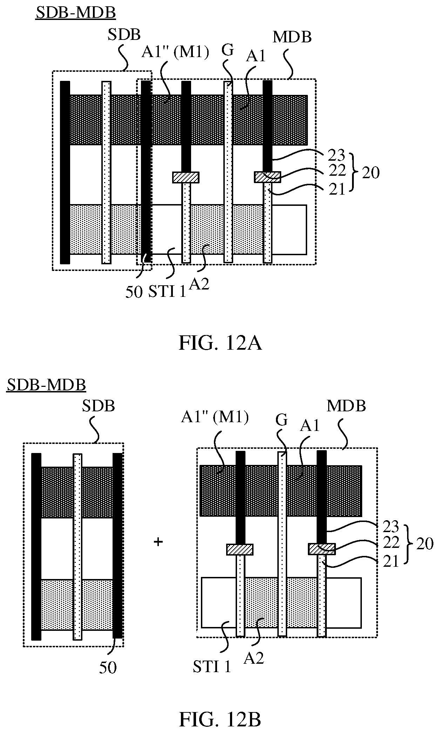

In some embodiments, an embodiment of this application provides an integrated circuit. As shown in FIG. 12A, the integrated circuit includes a first standard cell and a second standard cell. The first standard cell is the foregoing MDB standard cell, and the second standard cell is the SDB standard cell. The MDB standard cell and the SDB standard cell are allowed to be directly overlapped and spliced, and the MDB standard cell and the SDB standard cell do not need to be separated by one or more CPPs.

The SDB standard cell is any SDB standard cell in the related technology, and the SDB standard cell and the MDB standard cell have a same height, or heights of the SDB standard cell and the MDB standard cell are in an integer multiple relationship.

For example, the SDB standard cell includes two second diffusion breaks 50 that are disposed in parallel with the second gate strip 20.

The spacing region M1 (the active region A1") and the first shallow trench isolation region STI 1 1 in the MDB standard cell are located between the second gate strip 20 and the second diffusion break 50. Certainly, the second gate strip 20 and the second diffusion break 50 are the second gate strip 20 and the second diffusion break 50 that are abutted.

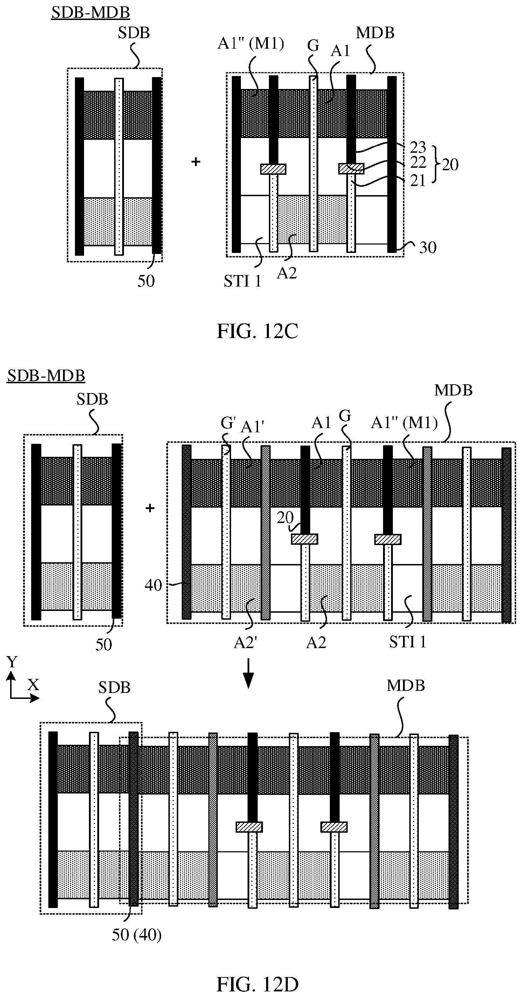

As shown in FIG. 12B, the SDB standard cell may be spliced with an MDB standard cell that does not include a first splicing strip 30. As shown in FIG. 12C, the SDB standard cell may alternatively be spliced with an MDB standard cell including a first splicing strip 30. In this case, the first splicing strip 30 overlaps the second diffusion break 50, regardless of whether the first splicing strip 30 and the first gate strip G are disposed at a same layer, or the first splicing strips 30 extend to bottom surfaces of the spacing region M1 and the first shallow trench isolation region STI 1 1. After the SDB standard cell and the MDB standard cell are spliced, a finally obtained structure is the same as a structure of the second diffusion break 50.

In this case, the spacing region M1 and the first shallow trench isolation region STI 1 1 are in contact with a side surface of the second diffusion break 50. Therefore, a spacing between the second gate strip 20 and the second diffusion break 50 that are abutted is equal to a spacing between the second gate strip 20 and the first gate strip G that are abutted. For example, the spacing between the second gate strip 20 and the second diffusion break 50 and the spacing between the second gate strip 20 and the first gate strip G are both a CPP.

As shown in FIG. 12D, the SDB standard cell may be further spliced with an MDB standard cell including a second splicing strip 40. In this case, the second splicing strip 40 overlaps the second diffusion break 50. After the SDB standard cell and the MDB standard cell are spliced, a finally obtained structure is the same as a structure of the second splicing strip 40 and the structure of the second diffusion break 50, and only one of the second splicing strip 40 or the second diffusion break 50 needs to be reserved.

When the MDB standard cell includes the second splicing strip 40, the MDB standard cell may include an extended gate strip G', or the MDB standard cell may not include an extended gate strip G'. In FIG. 12D, an example in which the MDB standard cell includes an extended gate strip G' is used for illustration.

In this case, a first splicing active region A1' is disposed between the spacing region M1 and the second diffusion break 50, and a second splicing active region A2' is disposed between the first shallow trench isolation region STI 1 1 and the second diffusion break 50. In this case, there are at least two CPPs between the second gate strip 20 and the second diffusion break 50.

Because a splicing line of the MDB standard cell is located at an end of the spacing region M1 (an active region A1") and an end of the first shallow trench isolation region STI 1, a distance between the end of the spacing region M1 (the active region A1") and the end of the first shallow trench isolation region STI 1 and the second gate strip 20 is one CPP. Alternatively, a splicing line of the MDB standard cells is located at a middle line of the second splicing strip 40. In addition, a splicing line of the SDB standard cell is located at a middle line of the second diffusion break 50. After the splicing line of the MDB standard cell and the splicing line of the SDB standard cell are overlapped and spliced, the second diffusion break 50 is one or more CPPs away from the second gate strip 20 of the MDB standard cell, and this meets a division rule of an isolation point in the EDA. Therefore, the MDB standard cell and the SDB standard cell can be spliced.

An out of order executive module (OEX module) in a core of a CPU is used as an example, PPA comparison is performed on an OEX module implemented by using an MDB standard cell, an OEX module implemented by using an SDB standard cell, and an OEX module implemented by using HDB mixing an MDB standard cell and an SDB standard cell. When physical comprehensive implementation is implemented under a condition of a 2.1 GHz frequency, a 0.6 V power supply voltage VDD, an 85°C temperature, and a typical corner (typical corner, TT), a physical comprehensive implementation result is shown in Table 2. In comparison with the OEX module implemented by using the SDB standard cell, the OEX module implemented by using the MDB standard cell increases an area (standard area) by 5%, increases a speed (speed) by 8%, increases a leakage (leakage) by 23%, and reduces power consumption (dynamic power) by 6%. However, in comparison with the OEX module implemented by using the SDB standard cell, the OEX module implemented by using the HDB mixing the SDB standard cell and the MDB standard cell reduces an area by 3%, increases a speed by 6%, increases a leakage by 1%, and reduces power consumption by 5%. In comparison with the OEX module implemented by using the MDB standard cell, the OEX module implemented by using the HDB mixing the SDB standard cell and the MDB standard cell reduces an area by 8%, reduces a speed by 2%, reduces a leakage by 22%, and increases power consumption by 1%. Therefore, the HDB has better performance than the MDB standard cell or the SDB standard cell in terms of cost, area, power consumption, performance, speed, and leakage.

**Table 2 PPA comparison of OEX modules implemented by using MDB, SDB, and HDB**

| | MDB vs SDB | MDB vs SDB |
|---|---|---|
| Area (µm²) | 105% | 97% |
| Speed (Ghz) | 108% | 106% |
| Leakage (W) | 123% | 101% |
| Power consumption (W/Ghz) | 94% | 95% |

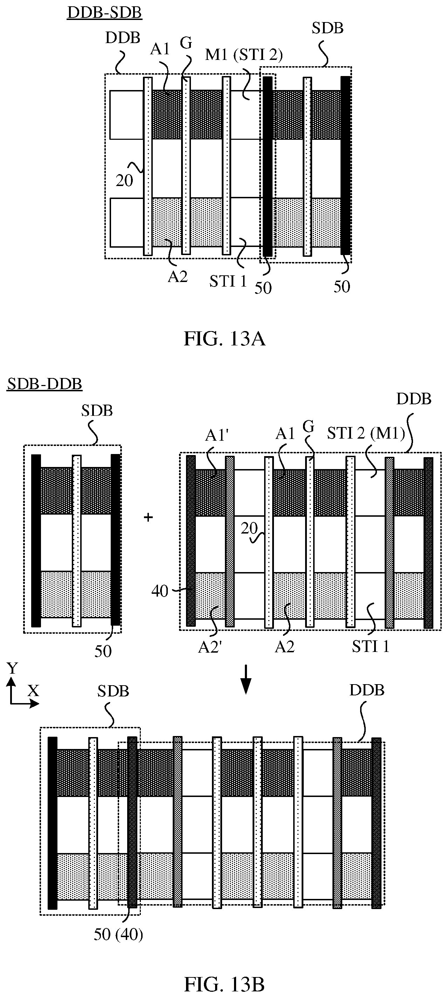

In some other embodiments, an embodiment of this application provides an integrated circuit. As shown in FIG. 13A, the integrated circuit includes a first standard cell and a second standard cell. The first standard cell is the foregoing DDB standard cell, and the second standard cell is the SDB standard cell. The DDB standard cell and the SDB standard cell are directly overlapped and spliced, and the DDB standard cell and the SDB standard cell do not need to be separated by one or more CPPs.

The SDB standard cell is any SDB standard cell in the related technology, and the SDB standard cell and the DDB standard cell have a same height, or heights of the SDB standard cell and the DDB standard cell are in an integer multiple relationship.

For example, the SDB standard cell includes two second diffusion breaks 50 that are disposed in parallel with a second gate strip 20, and at least one first gate strip is disposed between the two second diffusion breaks 50.

A spacing region M1 (a second shallow trench isolation region STI 2) and a first shallow trench isolation region STI 1 1 in the DDB standard cell are located between the second gate strip 20 and the second diffusion break 50. Certainly, the second gate strip 20 and the second diffusion break 50 are a second gate strip 20 and a second diffusion break 50 that are abutted.

Similarly, the SDB standard cell may be spliced with a DDB standard cell that does not include a first splicing strip 30. The SDB standard cell may alternatively be spliced with a DDB standard cell including a first splicing strip 30. In this case, the first splicing strip 30 overlaps the second diffusion break 50, regardless of whether the first splicing strip 30 and a first gate strip G are disposed at a same layer, or the first splicing strips 30 extend to bottom surfaces of the second shallow trench isolation region STI 2 and the first shallow trench isolation region STI 1 1. After the SDB standard cell and the DDB standard cell are spliced, a finally obtained structure is the same as a structure of the second diffusion break 50.

In this case, the second shallow trench isolation region STI 2 and the first shallow trench isolation region STI 1 1 are in contact with a side surface of the second diffusion break 50. Therefore, a spacing between the second gate strip 20 and the second diffusion break 50 that are abutted is equal to a spacing between the second gate strip 20 and the first gate strip G that are abutted. For example, the spacing between the second gate strip 20 and the second diffusion break 50 and the spacing between the second gate strip 20 and the first gate strip G are both a CPP.

As shown in FIG. 13B, the SDB standard cell may be further spliced with a DDB standard cell including a second splicing strip 40. In this case, the second splicing strip 40 overlaps the second diffusion break 50, regardless of whether the second splicing strip 40 and the first gate strip G are disposed at a same layer, or the second splicing strip 40 extends to a plane on which a bottom surface of a first active region A1 is located. After the SDB standard cell and the DDB standard cell are spliced, a finally obtained structure is the same as a structure of the second diffusion break 50.

When the DDB standard cell includes the second splicing strip 40, the DDB standard cell may include an extended gate strip G', or the DDB standard cell may not include an extended gate strip G'. In FIG. 13B, an example in which the DDB standard cell does not include an extended gate strip G' is used for illustration.

In this case, a first splicing active region A1' is disposed between the second shallow trench isolation region STI 2 and the second diffusion break 50, and a second splicing active region A2' is disposed between the first shallow trench isolation region STI 1 1 and the second diffusion break 50. In this case, there are two CPPs between the second gate strip 20 and the second diffusion break 50.

Because a splicing line of the DDB standard cell is located at an end of the spacing region M1 (that is, the second shallow trench isolation region STI 2) and an end of the first shallow trench isolation region STI 1, a distance between the end of the spacing region M1 (the second shallow trench isolation region STI 2) and the end of the first shallow trench isolation region STI 1 and the second gate strip 20 is one CPP. Alternatively, a splicing line of the DDB standard cell is located at a middle line of the second splicing strip 40. In addition, a splicing line of the SDB standard cell is located at a middle line of the second diffusion break 50. After the splicing line of the DDB standard cell and the splicing line of the SDB standard cell are overlapped and spliced, the second diffusion break 50 is one or more CPPs away from the second gate strip 20 of the DDB standard cell, and this meets a division rule of an isolation point in the EDA. Therefore, the DDB standard cell and the SDB standard cell can be spliced.

As shown in FIG. 13A, based on the DDB standard cell and the SDB standard cell, the integrated circuit may further include an MDB standard cell. The MDB standard cell may be spliced with the SDB standard cell, or the MDB standard cell may be spliced with the DDB standard cell.

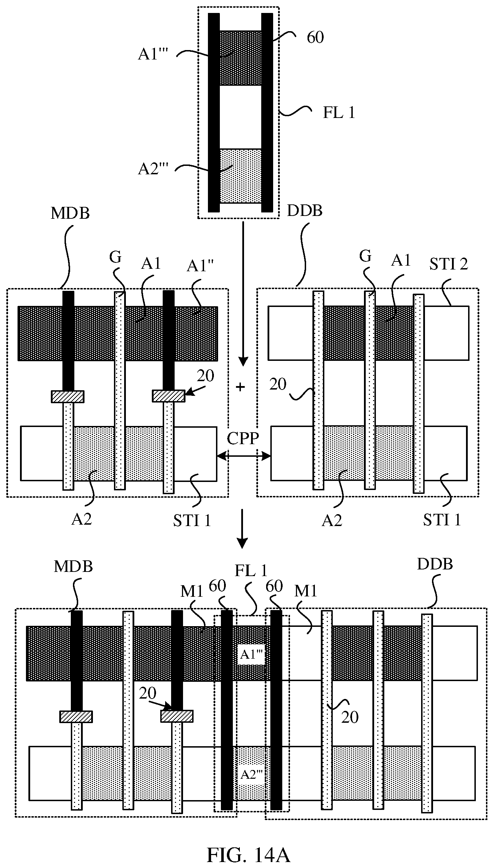

In some other embodiments, an embodiment of this application provides an integrated circuit. As shown in FIG. 14A, the integrated circuit includes a first standard cell and a second standard cell. The first standard cell is any one of the foregoing MDB standard cells, and the second standard cell is any one of the foregoing DDB standard cells.

The integrated circuit further includes two third diffusion breaks 60 disposed side by side, where the third diffusion break 60 extends in a first direction Y, and the two third diffusion breaks 60 are disposed side by side. The third diffusion breaks 60 extend to bottom surfaces of a spacing region M1 and a first shallow trench isolation region STI 1 1 in a third direction Z. The spacing region M1 of the MDB standard cell is disposed on a side that is of the third diffusion break 60 and that faces a second gate strip 20 of the MDB standard cell, and the spacing region M1 of the DDB standard cell is disposed on a side that is of the other third diffusion break 60 and that faces an edge gate 20 of the DDB standard cell.

The integrated circuit further includes a first splicing active region A1‴ and a second splicing active region A2"'. The first splicing active region A1‴ and the second splicing active region A2‴ are located between the two third diffusion breaks 60.

For the method for forming the integrated circuit shown in FIG. 14A, in some embodiments, as shown in FIG. 14A, both the MDB standard cell and the DDB standard cell are standard cells that do not include a second splicing strip 40.

In this case, for example, both the MDB standard cell and the DDB standard cell do not include a first splicing strip 30, and the MDB standard cell and the DDB standard cell may be spliced by using a first filler (filler) standard cell FL 1.

The first filler standard cell FL 1 includes, for example, two third diffusion breaks 60 that are disposed in parallel, and the first splicing active region A1‴ and the second splicing active region A2‴ that are located between the two third diffusion breaks 60. In this case, the first filler standard cell FL 1 may be understood as "filler 1" commonly referred to in the art. After the first filler standard cell FL 1 is spliced with the MDB standard cell and the DDB standard cell, a splicing line of the MDB standard cell and a splicing line of the DDB standard cell each overlap with a middle line (a splicing line) of a third diffusion break 60, to form a structure shown in FIG. 14A.

Certainly, the first filler standard cell FL 1 for splicing the MDB standard cell with the DDB standard cell may further include at least one redundant strip located between the two third diffusion breaks 60. In this case, the first filler standard cell FL 1 may be understood as "filler 2", "filler 3", "filler 4", or the like commonly referred to in the art.

Alternatively, for example, each of the MDB standard cell and the DDB standard cell includes a first splicing strip 30, and the first splicing strip 30 and the first gate strip G are disposed at a same layer. The MDB standard cell and the DDB standard cell may be spliced by using the first filler standard cell FL 1. During splicing, the first splicing strip 30 coincides with the third diffusion break 60, the third diffusion break 60 is retained in the finally formed integrated circuit, and the integrated circuit has one more first splicing strip 30 than the integrated circuit shown in FIG. 14A.

Alternatively, for example, each of the MDB standard cell and the DDB standard cell includes a first splicing strip 30, and the first splicing strips 30 extend to bottom surfaces of the spacing region M1 and the first shallow trench isolation region STI 1 1. In this case, the first splicing strip 30 may be understood as a diffusion break. The MDB standard cell and the DDB standard cell may be spliced by using the first filler standard cell FL 1. The MDB standard cell and the DDB standard cell may alternatively be spliced by using another filler standard cell including the first splicing active region A1‴ and the second splicing active region A2"'. The first splicing strip 30 (the first splicing strip 30 is used as the third diffusion break 60) or the third diffusion break 60 is finally retained at a splicing location. The first splicing active region A1‴ and the second splicing active region A2‴ are located between the first splicing strip 30 of the MDB standard cell and the first splicing strip 30 of the DDB standard cell, and the integrated circuit has one more first splicing strip 30 than the integrated circuit shown in FIG. 14A.

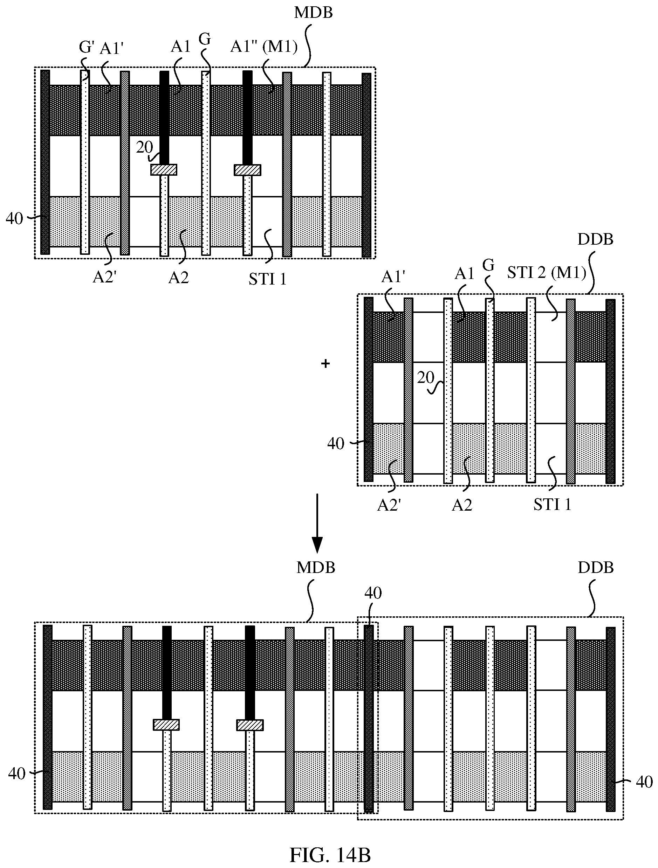

In some other embodiments, as shown in FIG. 14B, each of the MDB standard cell and the DDB standard cell is a standard cell including a second splicing strip 40.

In this case, the MDB standard cell and the DDB standard cell are allowed to be directly spliced by using the second splicing strip 40, and the second splicing strip 40 of the MDB standard cell and the second splicing strip 40 of the DDB standard cell overlap to form a structure shown in FIG. 14B.

In another possible case, the first standard cell and the second standard cell are standard cells of a same type.

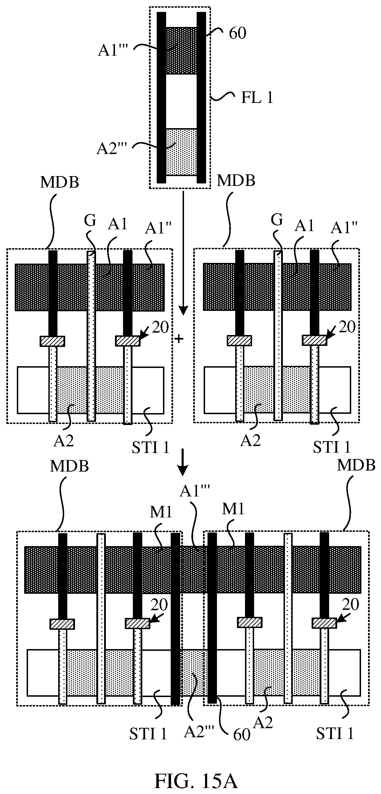

In some embodiments, an embodiment of this application further provides an integrated circuit. As shown in FIG. 15A, the integrated circuit includes a first standard cell and a second standard cell, and both the first standard cell and the second standard cell are MDB standard cells.

The integrated circuit further includes two third diffusion breaks 60 disposed side by side, where the third diffusion break 60 extends in a first direction Y, and the two third diffusion breaks 60 are disposed side by side. The third diffusion breaks 60 extend to bottom surfaces of a spacing region M1 and a first shallow trench isolation region STI 1 1 in a third direction Z. The spacing region M1 of the MDB standard cell is disposed on a side that is of the third diffusion break 60 and that faces a second gate strip 20 of the MDB standard cell, and the spacing region M1 of the other MDB standard cell is disposed on a side that is of the other third diffusion break 60 and that faces an edge gate 20 of the MDB standard cell.

The integrated circuit further includes a first splicing active region A1‴ and a second splicing active region A2"'. The first splicing active region A1‴ and the second splicing active region A2‴ are located between the two third diffusion breaks 60.

For the method for forming the integrated circuit shown in FIG. 14A, in some embodiments, as shown in FIG. 15A, both the first standard cell and the second standard cell are MDB standard cells that do not include a second splicing strip 40.

In this case, for example, as shown in FIG. 15A, both the two MDB standard cells do not include a first splicing strip 30, and the two MDB standard cells may be spliced by using the first filler standard cell FL 1.

After the first filler standard cell FL 1 is spliced with the two MDB standard cells, splicing lines of the two MDB standard cells coincide with a middle line (a splicing line) of one third diffusion break 60 respectively, to form a structure shown in FIG. 15A.

Alternatively, for example, each of the two MDB standard cells includes a first splicing strip 30, and the first splicing strip 30 and the first gate strip G are disposed at a same layer. The two MDB standard cells may be spliced by using the first filler standard cell FL 1. During splicing, the first splicing strip 30 coincides with the third diffusion break 60, the third diffusion break 60 is retained in the finally formed integrated circuit, and the integrated circuit has one more first splicing strip 30 than the integrated circuit shown in FIG. 15A.

Alternatively, for example, each of the two MDB standard cells includes a first splicing strip 30, and the first splicing strips 30 extend to bottom surfaces of the spacing region M1 and the first shallow trench isolation region STI 1 1. The two MDB standard cells may be spliced by using the first filler standard cell FL 1. The two MDB standard cells may alternatively be spliced by using another filler standard cell FL including the first filled active region A1‴ and the second filled active region A2"'. The first splicing strip 30 (the first splicing strip 30 is used as the third diffusion break 60) or the third diffusion break 60 is finally retained at a splicing location. The first splicing active region A1‴ and the second splicing active region A2‴ are located between the first splicing strips 30 of the two MDB standard cells, and the integrated circuit has one more first splicing strip 30 than the integrated circuit shown in FIG. 15A.

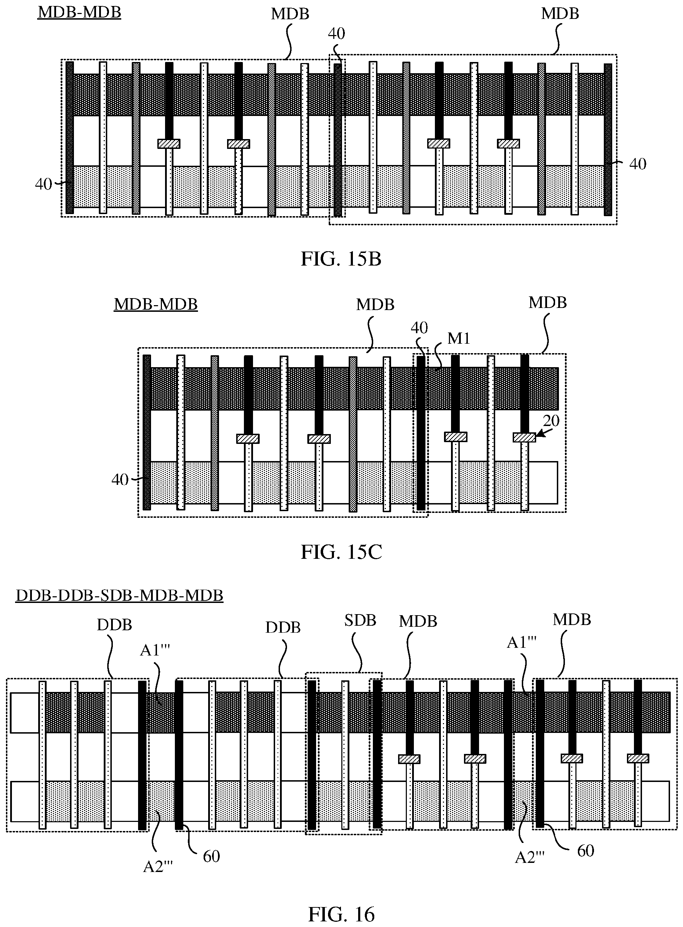

In some other embodiments, as shown in FIG. 15B, each of the two MDB standard cells is a standard cell including a second splicing strip 40.

In this case, the two MDB standard cells are directly spliced by using the second splicing strip 40, and the second splicing strips 40 of the two MDB standard cells overlap, to form a structure shown in FIG. 15B.

In some other embodiments, as shown in FIG. 15C, one of the two MDB standard cells includes a second splicing strip 40, and the other MDB standard cell does not include a second splicing strip 40.

For example, the first standard cell includes a second splicing strip 40, and the second standard cell does not include a second splicing strip 40. A middle line of the second splicing strip 40 is used as a splicing line of the first standard cell, an edge line of the second standard cell is used as a splicing line of the second standard cell, and the first standard cell and the second standard cell are directly spliced at the splicing lines. The spacing region M1 and the first shallow trench isolation region STI 1 1 of the second standard cell are in contact with a side surface of the second splicing strip 40 in the first standard cell.

Certainly, in this case, the second standard cell may include a first splicing strip 30, or the second standard cell may not include a first splicing strip 30.

In some other embodiments, an embodiment of this application further provides an integrated circuit. As shown in FIG. 16, the integrated circuit includes a first standard cell and a second standard cell, and both the first standard cell and the second standard cell are DDB standard cells.

A structure of the integrated circuit when both the first standard cell and the second standard cell are DDB standard cells is similar to a structure when both the first standard cell and the second standard cell are MDB standard cells, and only the MDB standard cell is replaced with the DDB standard cell. In other words, a structure of the second gate strip 20 and a structure of the spacing region M1 are replaced. Refer to the related description that both the first standard cell and the second standard cell are MDB standard cells. Details are not described herein again.

Certainly, based on the two DDB standard cells, the integrated circuit may further include an SDB standard cell and an MDB standard cell. A structure in FIG. 16 is merely an example, and does not impose any limitation.

It can be learned from the foregoing description that the integrated circuit provided in this embodiment of this application may be any combination of the MDB standard cell and the DDB standard cell that are provided in embodiments of this application and any SDB standard cell in the related technology.

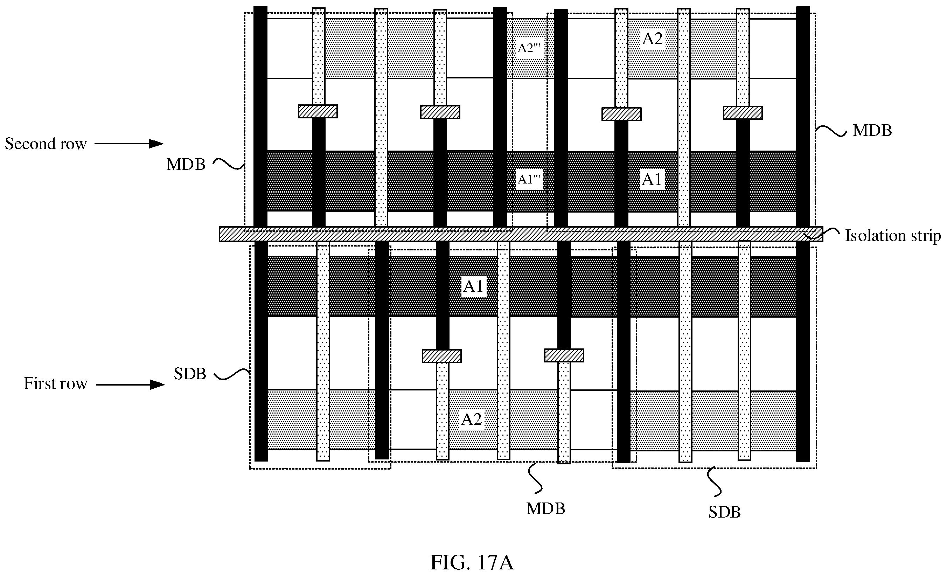

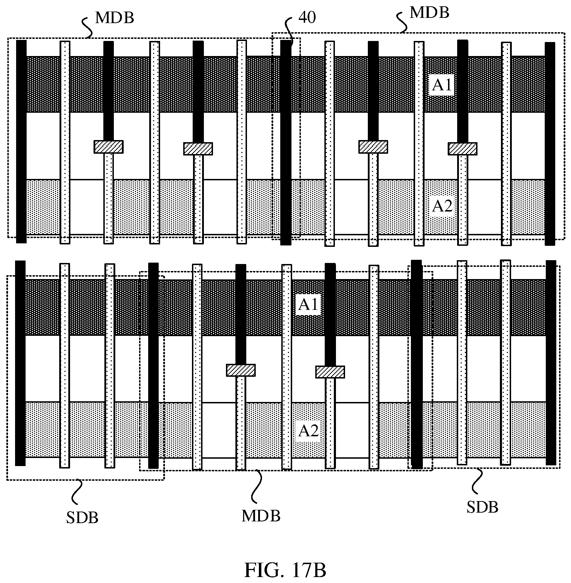

In some embodiments, as shown in FIG. 17A and FIG. 17B, the integrated circuit includes a plurality of standard cell rows. In either FIG. 17A or FIG. 17B, an example in which an integrated circuit includes two standard cell rows is used for illustration.

Each standard cell row may include at least one of the MDB standard cell and the DDB standard cell that are provided in embodiments of this application and any SDB standard cell in the related technology.

In an embodiment, as shown in FIG. 17A, an isolation strip is disposed between abutted standard cell rows, and first gate strips G of abutted standard cell rows are separated by using the isolation strip.

As shown in FIG. 17A, the isolation strip may be a non-disruptive structure. Alternatively, the isolation strip may be of a disruptive structure. For example, the isolation strip includes a plurality of isolation segments disposed at intervals in a second direction X.

In some embodiments, the active regions on two sides of the isolation strip are a same type of active regions. Alternatively, it is understood that abutted active regions in abutted standard cell rows are a same type of active regions.

For example, as shown in FIG. 17A, both sides of the isolation strip are first active regions A1, and the first active region A1 is a P-type active region. Alternatively, both sides of the isolation strip are second active regions A2, and the second active region A2 is an N-type active region.

In some embodiments, a standard cell STC in the integrated circuit includes a group of first active regions A1 and second active regions A2, and the standard cell STC is located in one standard cell row.

In some other embodiments, a standard cell STC in the integrated circuit includes a plurality of groups of first active regions A1 and second active regions A2, and the standard cell STC spans a plurality of standard cell rows.

For example, a border (border) of a standard cell STC may be used to determine whether the standard cell STC is located in one standard cell row or spans a plurality of standard cell rows.

In another embodiment, as shown in FIG. 17B, standard cells in abutted standard cell rows are disposed at intervals, and there is a spacing between first gate strips G of abutted standard cell rows.

In this case, as shown in FIG. 17B, the first active region A1 and the second active region A2 in the integrated circuit may be alternately arranged, or the first active region A1 and the second active region A2 in the integrated circuit may be arranged in a manner similar to that shown in FIG. 17A.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A standard cell, comprising:
a first active region and a second active region that are disposed side by side on a side of a substrate in a first direction, wherein the first active region and the second active region are an N-type active region and a P-type active region for each other;
at least one first gate strip, wherein the first gate strip extends in the first direction, and is located on a side that is of the first active region and the second active region and that is away from the substrate;
two second gate strips, wherein the at least one first gate strip is located between the two second gate strips, the two second gate strips and the at least one first gate strip are arranged at equal spacings in a second direction, the first direction intersects with the second direction, both the first direction and the second direction are parallel to the substrate, and in the second direction, two ends of the second active region are located on a side that is of the two second gate strips and that is close to the substrate; and
two spacing regions and two first shallow trench isolation regions, wherein in the second direction, the first active region is located between the two spacing regions, the second active region is located between the two first shallow trench isolation regions, and a width of the spacing region and a width of the first shallow trench isolation region are equal to the spacing.

2. The standard cell according to claim 1, wherein the second gate strip comprises a first blocking gate, a first blocking part, and a first diffusion break, and the first blocking part is located between the first blocking gate and the first diffusion break; and
in a direction perpendicular to the substrate, the first diffusion break extends to a bottom surface that is of the first active region and that is close to the substrate, and the first blocking gate is located on a side that is of the second active region and that is away from the substrate.

3. The standard cell according to claim 1 or 2, wherein the spacing region and the first active region are a same type of active regions.

4. The standard cell according to claim 1, wherein the second gate strip is located on the side that is of the first active region and the second active region and that is away from the substrate, and the spacing region is a second shallow trench isolation region.

5. The standard cell according to any one of claims 1 to 4, wherein the standard cell further comprises two first splicing strips; and
the two second gate strips are located between the two first splicing strips in the second direction, and a distance between the first splicing strip and the second gate strip is equal to the spacing.

6. The standard cell according to claim 5, wherein
the first splicing strips and the first gate strip are disposed at a same layer; or
in the direction perpendicular to the substrate, the first splicing strips extend to bottom surfaces that are of the spacing region and the first shallow trench isolation region and that are close to the substrate.

7. The standard cell according to any one of claims 1 to 6, wherein the standard cell further comprises two second splicing strips; and
the two second gate strips are located between the two second splicing strips in the second direction, and in the direction perpendicular to the substrate, the second splicing strips extend to bottom surfaces that are of the first active region and the second active region and that are close to the substrate.

8. The standard cell according to claim 7, wherein the standard cell further comprises two first extended active regions and two second extended active regions that are located on sides that are of the second splicing strips and that face the first splicing strips; and
in the second direction, the two spacing regions are located between the two first extended active regions, and the two first shallow trench isolation regions are located between the two second extended active regions; and the first extended active region and the first active region are a same type of active regions, and the second extended active region and the second active region are a same type of active regions.

9. The standard cell according to claim 7 or 8, wherein the standard cell further comprises a plurality of extended gate strips, and the extended gate strips are located on the side that is of the second splicing strip and that faces the second gate strip.

10. The standard cell according to claim 9, wherein the second splicing strip, the extended gate strip, the first splicing strip, the second gate strip, and the first gate strip are arranged at equal spacings in the second direction.

11. The standard cell according to any one of claims 1 to 10, wherein the standard cell further comprises a gate via, and the gate via communicates with the first gate strip.

12. An integrated circuit, comprising a first standard cell and a second standard cell, wherein the first standard cell and the second standard cell are disposed side by side in a direction intersecting with a first gate strip, the first standard cell is the standard cell according to any one of claims 1 to 11, and/or the second standard cell is the standard cell according to any one of claims 1 to 11.

13. The integrated circuit according to claim 12, wherein the second standard cell is a single diffusion break standard cell, the single diffusion break standard cell comprises two second diffusion breaks that are disposed in parallel with a second gate strip, and the spacing region and the first shallow trench isolation region are located between the second gate strip and the second diffusion break that are abutted.

14. The integrated circuit according to claim 13, wherein the spacing region and the first shallow trench isolation region are in contact with a side surface of the second diffusion break.

15. The integrated circuit according to claim 13, wherein a first extended active region is further disposed between the second diffusion break and the spacing region, and a second extended active region is further disposed between the second diffusion break and the first shallow trench isolation region.

16. The integrated circuit according to claim 12, wherein the integrated circuit comprises two third diffusion breaks parallel to the first gate strip, the third diffusion break extends to a bottom surface that is of a first active region and that is close to a substrate, a spacing region of the first standard cell is disposed on a side that is of one of the third diffusion break and that faces the second gate strip, and a spacing region of the second standard cell is disposed on a side that is of the other of the third diffusion breaks and that faces an edge gate; and
the integrated circuit further comprises a first splicing active region and a second splicing active region, wherein the first splicing active region and the second splicing active region are located between the two third diffusion breaks.

17. The integrated circuit according to claim 12, wherein each of the first standard cell and the second standard cell comprises a second splicing strip; and
the second splicing strip of the first standard cell coincides with the second splicing strip of the second standard cell.

18. The integrated circuit according to claim 12, wherein the first standard cell comprises a second splicing strip; and
a spacing region of the second standard cell and a first shallow trench isolation region are in contact with a side surface of the second splicing strip.

19. The integrated circuit according to claim 17 or 18, wherein the first standard cell and the second standard cell have a same structure; or
a second gate strip of the first standard cell comprises a first blocking gate, a first blocking part, and a first diffusion break, and a second gate strip of the second standard cell is located on a side that is of a first active region and a second active region and that is away from a substrate.

20. The integrated circuit according to any one of claims 12 to 19, wherein the integrated circuit comprises a plurality of standard cell rows, and at least one first standard cell and/or at least one second standard cell are/is disposed in each of the standard cell rows.

21. An electronic device, comprising a circuit board and an integrated circuit, wherein the integrated circuit is the integrated circuit according to any one of claims 12 to 20.

22. A standard cell library, comprising a plurality of standard cells, wherein the plurality of standard cells comprise the standard cell according to any one of claims 1 to 11 and a single diffusion break standard cell.
